# EUROPEAN PATENT APPLICATION

(11) **EP 4 806 931 A1**
(43) Date of publication of application: **16.09.2026**
(21) Application number: 25163791.4
(22) Date of filing: 14.03.2025
(51) Int. Cl.: C08G 18/76

(54) **METHOD FOR PRODUCING RIGID POLYURETHANE FOAM**

(71) Applicant: Unilin, BV, 8710 Wielsbeke (BE)
(72) Inventor: Beerens, Brecht, 8710 Wielsbeke (BE); Verlee, Arno, 8710 Wielsbeke (BE)
(74) Representative: Unilin Technologies

(57) **Abstract**

A method for producing rigid polyurethane foam comprises the steps of:
- providing ingredients comprising a first polyol mixture, a second polyol mixture, a polyisocyanate, at least a blowing agent, at least a surfactant, at least a catalyst, and optionally additives such as flame retardant additives;
- mixing the ingredients thereby obtaining a liquid polyurethane foam formulation for producing a rigid polyurethane foam; and
- depositing the liquid polyurethane foam formulation;
characterized in that the second polyol mixture comprises polyurethane particles dispersed in the second polyol mixture.

## Description

The invention relates to a method for producing rigid polyurethane foam, e.g. a method for producing rigid isocyanurate foam.

It is known to produce polyurethane, e.g. polyurethane or polyisocyanurate foams, by a chemical reaction between a polyol and a di-isocyanate or a polyisocyanate.

WO2020/076529A1 and WO2020/076539A1 describe recipes for the production of polyurethane foams. The recipes comprise polyol, a polyisocyanate, a blowing agent, surfactants, and a catalyst.

EP4385702A1 describes a method for producing rigid isocyanurate insulation panels by depositing a liquid isocyanurate foam formulation.

It is an objective of the invention to provide a method in which solid recycled material is integrated in the production of the rigid polyurethane foam.

The first aspect of the invention is a method for producing rigid polyurethane foam. The method comprises the steps of:
- providing ingredients comprising a first polyol mixture, a second polyol mixture, a polyisocyanate, at least a blowing agent, at least a surfactant, at least a catalyst, and optionally additives such as flame retardant additives;
- mixing the ingredients thereby obtaining a liquid polyurethane foam formulation for producing a rigid polyurethane foam; and
- depositing the liquid polyurethane foam formulation; characterized in that the second polyol mixture comprises polyurethane particles dispersed in the second polyol mixture.

In prior art methods for producing rigid polyurethane, a polyol mixture - which comprises polyol and additives - is mixed with a polyisocyanate to obtain the liquid polyurethane foam formulation. In the method according to the invention, the first polyol mixture and the second polyol mixture each comprises polyol and polyurethane particles are added in the second polyol mixture. The polyol in the first polyol mixture can differ from the polyol in the second polyol mixture.

The method of the invention has the benefit that polyurethane particles can be recycled and reused in the production of rigid polyurethane foam. The method of the invention has the further benefit that the use of the polyurethane particles in the method provide rigid polyurethane foam with increased dimensional stability.

The at least a blowing agent, the at least a surfactant, the at least a catalyst, and the optional additives such as flame retardant additives can each separately or in combination be added to the first polyol mixture, or to the second polyol mixture. It is meant that some or all of these ingredients (the at least a blowing agent, the at least a surfactant, the at least a catalyst, and the optional additives such as flame retardant additives) is added to the first polyol mixture, or that some or all of these ingredients (the at least a blowing agent, the at least a surfactant, the at least a catalyst, and the optional additives such as flame retardant additives) is added to the second polyol mixture.

The polyurethane particles used are preferably polyurethane foam particles. The polyurethane foam particles are preferably obtained from milling and/or sawing rigid polyurethane foam, e.g. from milling and/or sawing rigid polyurethane foam panels.

The polyurethane particles are preferably compressed polyurethane foam particles. Such particles can be obtained when milling or sawing rigid polyurethane foam. The milling or sawing operation can compress the rigid polyurethane foam particles.

Preferably, the polyurethane particles are obtained from milling and/or sawing rigid polyurethane foam made according to the method of the invention. More preferably, the polyurethane particles are obtained from milling and/or sawing rigid polyurethane foam with the same composition as will be made in the method according to the invention.

This way, a circular system can be installed.

The method can be a method for producing rigid isocyanurate foam; preferably wherein the polyurethane particles comprise or consists of isocyanurate particles.

Polyurethane foam particles for use in the method of the invention can e.g. be obtained from sawing and/or milling - e.g. from milling coupling parts at the edges of - rigid polyurethane foam panels made according to the method of the invention.

Polyurethane foam particles for use in the method of the invention can be obtained from scrapped polyurethane foam panels, whether production scrap, production waste or post consumer scrap. The facers are preferably removed from the scrapped polyurethane foam panels. The polyurethane foam is then ground or milled, preferably to the required particle size.

The polyol of the first polyol mixture can comprise or consist of polyester polyol. Such embodiment is especially beneficial if the method is a method for producing rigid isocyanate foam.

The polyol of the second polyol mixture can comprise or consist of polyester polyol. Such embodiment is especially beneficial if the method is a method for producing rigid isocyanate foam.

The method can be a method for producing rigid isocyanurate foam. Preferably, the polyurethane particles used in such method are isocyanurate particles.

The at least a surfactant can comprise a silicone surfactant (e.g. a cyclic siloxane) and/or a non-silicone surfactant. The at least a surfactant is preferably added in the first polyol mixture.

The first polyol mixture comprises polyol, preferably polyester polyol having a hydroxyl number of from 150 to 600 mg KOH/g and a functionality of at least 2.

The second polyol mixture comprises polyol, preferably polyester polyol having a hydroxyl number of from 150 to 600 mg KOH/g and a functionality of at least 2.

The isocyanate index of the liquid polyurethane foam formulation is preferably between 100 and 500.

The polyisocyanate can be a polymeric methylene diphenyl diisocyanate. Polymeric methylene diphenyl diisocyanate can e.g. be used in a method according to the invention for producing rigid isocyanurate foam.

A preferred method is characterized in that the polyol of the first polyol mixture has a larger average molecular weight according to mass than the polyol of the second polyol mixture.

The addition of the polyurethane particles in the second polyol mixture will increase the viscosity of the second polyol mixture. In order to reduce the viscosity of the second polyol mixture to improve its processability and in order not to differentiate too much in viscosity from the first polyol mixture, it is beneficial that the polyol of the first polyol mixture has a larger average molecular weight according to mass than the polyol of the second polyol mixture. It means that the polyol of the second polyol mixture can have a lower viscosity than the polyol of the first polyol mixture.

A preferred method is characterized in that the polyol of the second polyol mixture has a lower viscosity than the polyol of the first polyol mixture.

The addition of the polyurethane particles will increase the viscosity of the second polyol mixture. Therefore, using polyol in the second polyol mixture that has lower viscosity than the polyol of the first polyol mixture is beneficial.

Preferably, the viscosity of the polyol of the second polyol mixture is at least 1000 mPa.s lower than the viscosity of the polyol of the first polyol mixture; more preferably at least 2000 mPa.s lower, even more preferably at least 3000 mPa.s lower, even more preferably at least 4000 mPa.s lower.

The polyol of the second polyol mixture preferably has a viscosity lower than 4000 mPa.s, more preferably lower than 3000 mPa.s, even more preferably lower than 2500 mPa.s.

The polyol of the first polyol mixture preferably has a viscosity of at least 4000 mPa.s.

The second polyol mixture preferably comprises a dispersing agent for dispersing the polyurethane particles in the second polyol mixture.

The second polyol mixture preferably comprises propylene carbonate.

It is a benefit of the addition of propylene carbonate in the second polyol mixture that the viscosity of the second polyol mixture is reduced, thus, counteracting the effect on the viscosity by the addition of the polyurethane particles.

A preferred method is characterized in that the second polyol mixture comprises a liquid flame retardant additive, preferably selected from triethyl phosphate (TEP) or tris (chloropropyl) phosphate (TCPP).

The addition of flame retardant additive in the second polyol mixture - which comprises the polyurethane particles - has the benefit that the viscosity of the second polyol mixture is reduced, facilitating its processability and its blending with the other ingredients of the liquid polyurethane foam formulation.

The full amount of liquid flame retardant additive used in the liquid polyurethane foam formulation can be added to the second polyol mixture.

Part of the amount of liquid flame retardant additive used in the liquid polyurethane foam formulation can be added in the second polyol mixture, and part can be added in the first polyol mixture. Such embodiments have the benefit that the viscosity of the first polyol mixture and the viscosity of the second polyol mixture can be tuned.

Preferably, at least 50 wt% - and more preferably at least 75 wt% - of the amount of liquid flame retardant additive used in the liquid polyurethane foam formulation is added to the second polyol mixture.

Preferably, between 10 and 15 parts by weight of flame retardant additive relative to the combination of the polyol of the first polyol mixture and the polyol of the second polyol mixture is added in the liquid polyurethane foam formulation.

A preferred method is characterized in that the first polyol mixture comprises one or more than one or all of the at least a blowing agent, the at least a surfactant, the at least a catalyst.

The first polyol mixture can comprise part or all of the flame retardant additives, or no flame retardant additive.

The blowing agent can comprise water, and one or more auxiliary blowing agents, such as pentane, e.g. cyclopentane, isopentane, n-pentane, or combinations thereof.

The at least a blowing agent preferably comprises cyclopentane, preferably in addition to water.

The use of cyclopentane is beneficial, as it will result in better flow of the liquid polyurethane foam formulation when depositing it. Such improvement in flowability is beneficial, as the higher viscosity of the liquid polyurethane foam formulation due to the use of polyurethane particles will cause a reduction in flowability. A sufficient degree of flowability is required for the correct formation of the foam and for the required properties and characteristics of the foam.

The at least a blowing agent preferably comprises - more preferably in addition to water - on the one hand cyclopentane and on the other hand isopentane and/or n-pentane.

Such embodiment is beneficial, as it improves the flow of the liquid foam formulation while maintaining a high dimensional stability of the polyurethane foam which is produced.

It must be mentioned that the addition of the polyurethane particles has a positive effect on the dimensional stability of the polyurethane foam that is made.

In a preferred embodiment, the amount by mass of cyclopentane in the liquid polyurethane formulation is higher than the amount by mass of the combination of isopentane and n-pentane, more preferably the mass ratio of the cyclopentane to the combination of isopentane and n-pentane is between 1:2 and 2: 1.

A preferred method is characterized in that the liquid polyurethane formulation comprises between 1 and 3 wt% polyurethane particles.

Such embodiments provide an effective way of recycling the sawing and milling dust in a plant producing rigid polyurethane foam insulation panels.

Such embodiments provide optimum properties of the rigid polyurethane foam made, as a higher amount of polyurethane particles could have a negative effect on the thermal insulation properties of the rigid polyurethane foam that is produced.

Preferably, the full amount of polyurethane particles used in the method are added in the liquid polyurethane foam formulation via the second polyol mixture.

The polyurethane particles preferably have D50 particle size less than 70 micrometer, and more preferably less than 60 micrometer, and more preferably higher than 30 micrometer, and more preferably higher than 40 micrometer.

Polyurethane particles of such size provide good dispersion of the polyurethane particles in the final rigid polyurethane foam product. A good dispersion is beneficial for the properties of the rigid polyurethane foam product, as well as for the uniformity of the properties of the rigid polyurethane foam product that is made.

The particles preferably have D50 particle size higher than 30 micrometer - and more preferably higher than 40 micrometer - to prevent an excessive increase in viscosity of the second polyol mixture and of the liquid polyurethane foam formulation.

An excessive viscosity of the liquid polyurethane foam formulation could have a negative impact on the formation of the foam after depositing the liquid polyurethane foam formulation.

The polyurethane particles preferably have D90 particle size less than 80 micrometer, more preferably less than 70 micrometer.

Particles of large size could block liquid flow, and have a negative effect on the foam that is produced. Therefore, it is preferred that the particles size distribution is not too broad, especially that the polyurethane particles do not comprise too large particles, certainly not in excessive amounts.

Within the context of the invention, the particle size is determined by laser light diffraction performed in accordance with ISO 13320:2020. The D50 particle size is determined in the particle size distribution according to volume obtained by the laser light diffraction as the particle size at which 50% by volume of the particles are smaller. The D90 particle size is determined in the particle size distribution according to volume as the particle size at which 90% by volume of the particles are smaller.

A preferred method is characterized in that the liquid polyurethane foam formulation is obtained by injecting the first polyol mixture, the second polyol mixture and the polyisocyanate in a mixing head comprising three feeds for feeding liquid flows; wherein the first feed feeds the first polyol mixture in the mixing head, the second feed feeds the second polyol mixture in the mixing head and the third feed feeds the polyisocyanate in the mixing head.

The injection can be performed using nozzles.

A preferred method is characterized in that in that the liquid polyurethane foam formulation is obtained by injecting in a mixing head at least a first stream comprising the first polyol mixture, at least a second stream comprising the second polyol mixture and a stream comprising the polyisocyanate; preferably wherein the second polyol mixture is injected at lower pressure - and preferably at less than half the pressure - than the pressures with which the first polyol mixture and the polyisocyanate are injected. The injection can be performed using nozzles.

The chemical reactions between water, polyol and polyisocyanate can start in the mixing head.

The first polyol mixture and the polyisocyanate are preferably each injected in the mixing head at a pressure less than 130 bar, preferably less than 125 bar, and preferably more than 110 bar.

The lower injection pressure of polyol and polyisocyanate compared to standard processes results in slower chemical reactions between polyol and polyisocyanate in the mixing head, resulting in less increase of the viscosity of the polyurethane foam formulation. This way, the polyurethane foam formulation can be more easily deposited and flow to cover the surface of the surface (e.g. a facer for a rigid polyurethane foam insulation panel) onto which the liquid polyurethane foam formulation is deposited. This way, a more appropriate balance can be obtained between flow and two-dimensional foaming of the liquid polyurethane foam formulation after depositing the liquid polyurethane foam formulation.

The second polyol mixture is preferably injected in the mixing head at a pressure less than 50 bar, and preferably at a pressure of at least 20 bar, more preferably of at least 30 bar.

Such pressure is beneficial for injecting the second polyol mixture, as the second polyol mixture comprises the polyurethane particles. The pressure value is appropriate for tuning the speed of chemical reactions in the mixing head.

A preferred method is characterized in that each of the first polyol mixture, the second polyol mixture and the polyisocyanate is injected in the mixing head at a temperature of at most 25°C, preferably of at most 23°C, and preferably at least 21°C.

The temperatures are selected such that the chemical reactions in the mixing head between the polyisocyanate and the polyols are slowed down, resulting in less increase of the viscosity of the liquid polyurethane foam formulatio²n that is deposited. This way, the polyurethane foam formulation can be more easily deposited and flow to cover the surface of the surface (e.g. a facer for a rigid polyurethane foam insulation panel) onto which the liquid polyurethane foam formulation is deposited. This way, a more appropriate balance can be obtained between flow and two-dimensional foaming of the liquid polyurethane foam formulation after depositing the liquid polyurethane foam formulation.

A preferred method is characterized in that the ratio by weight of the amount of polyol in the first polyol mixture to the amount of polyol in the second polyol mixture is between 9:1 and 7:3.

Such embodiments are beneficial as it allows optimum blending in the mixing head. Such embodiments are also beneficial as they allow to work with a first polyol mixture and with a second polyol mixture that have viscosity values which differ not too much, such that processing is facilitated.

Preferably, the difference in viscosity between the first polyol mixture and the second polyol mixture is less than 1000 mPa.s, preferably less than 800 mPa.s.

Preferably, the viscosity of the first polyol mixture is between 200 and 500 mPa.s.

Preferably, the viscosity of the second polyol mixture is between 1200 and 1600 mPa.s.

The polyurethane particles used in the method can be solid polyurethane foam particles, more preferably milling and/or sawing dust obtained from milling and/or sawing rigid polyurethane foam panels.

A preferred method is a method for producing rigid isocyanurate foam, preferably wherein the polyurethane particles comprise or consist of solid isocyanurate particles, more preferably the solid isocyanurate particles comprise of consist of milling and/or sawing dust obtained from milling and/or sawing rigid isocyanurate foam panels

A preferred method comprises the step of depositing - using a plurality of orifices - the liquid polyurethane foam formulation on a facer. The deposition is preferably performed such that, at the position where the liquid polyurethane foam formulation is deposited on the facer, the facer is moistened in an interrupted manner by the liquid polyurethane foam formulation in the direction at right angles to the direction of production. In the method, the liquid polyisocyanurate foam formulation reacts to form a polyurethane foam which is bonded to the facer.

The facer onto which the liquid polyurethane foam formulation is deposited is preferably supported by a heated table, at least at the position wherein the liquid polyurethane foam formulation is deposited.

Such embodiment is beneficial for the fixation of the foam onto the facer onto which the liquid foam formulation is deposited.

A preferred method is characterized in that the method comprises the step of depositing the liquid polyurethane foam formulation on a facer, such that, at the position where the liquid polyurethane foam formulation is deposited on the facer, the facer is moistened in an uninterrupted manner by the liquid polyurethane foam formulation in the direction at right angles to the direction of production; and in that, at the position where the liquid polyurethane foam formulation is deposited on the facer, the facer is supported by a heated table, wherein, in the method, the liquid polyisocyanurate foam formulation reacts to form a polyurethane foam which is bonded to the facer.

This way of depositing the liquid polyurethane foam formulation is described in EP4385702A1, the full content of which is hereby incorporated by reference. This method can be realized by positioning the spray nozzles that deposit the liquid polyurethane foam formulation sufficiently closely together.

The liquid polyurethane foam formulation can comprises air. Preferably, air is injected in the first polyol mixture, in the second polyol mixture, or in the polyisocyanate, or in two or in all three of these streams.

Air in the liquid polyurethane foam formulation is beneficial as it provides nucleation for the foam cells.

The liquid polyurethane foam formulation is preferably deposited on a facer.

The facer can comprise an aluminum facer.

The facer can be a laminate comprising one or more of at least an aluminum facer, at least one paper sheet (preferably a Kraft paper sheet) and at least one polymer film.

The facer can be a laminate of at least 100 micrometer thick, preferably of less than 300 micrometer thick.

The facer may consist of an aluminum facer, preferably of a coated aluminum facer. The aluminum facer providing the facer can comprise a protective coating at the side opposite to the side onto which the liquid polyurethane foam formulation is deposited. The aluminum facer providing the facer can comprise a coating at the side onto which the liquid polyurethane foam formulation is deposited, for improving the adhesion of the rigid foam in the foaming process. This coating can be a polyurethane coating.

Preferably, the viscosity of the polyisocyanate is
- less than or equal to 200 mPa.s in the production of rigid polyurethane foam of at most 25 mm thickness;
- between 200 and 400 mPa.s in the production of rigid polyurethane foam of between 25 mm and 100 mm thickness;
- between 300 and 500 mPa.s in the production of rigid polyurethane foam of more than 100 mm thickness.

Such viscosity levels are beneficial for optimizing in view of the thickness of the rigid polyurethane foam to be produced the combination of flow and two-dimensional rising of the liquid polyurethane foam formulation after depositing it.

The rigid insulation foam product can be produced between a first facer and a second facer, which can be identical or can be different in composition.

The second aspect of the invention is a rigid polyurethane insulation foam product, characterized in that the rigid polyurethane foam product comprises a rigid polyurethane foam core comprising rigid polyurethane particles, preferably in an amount between 1 and 3 percent by weight of the rigid polyurethane foam core.

The rigid polyurethane insulation foam product of the second aspect of the invention has the benefit that it comprises recycled product, and in that its dimensional stability is higher compared to similar rigid polyurethane insulation foam product of similar composition not comprising the rigid polyurethane particles.

The presence of the rigid polyurethane particles can be observed using 3D-microscopy on the rigid polyurethane foam product.

The third aspect of the invention is a rigid polyurethane insulation foam product, characterized in that the rigid polyurethane foam product is manufactured according to a method as in any embodiment of the first aspect of the invention.

The rigid polyurethane insulation foam product of the second aspect or of the third aspect of the invention can be a rigid polyurethane insulation panel, preferably wherein the rigid polyurethane foam core is provided between two facers. The facers can have the composition as described at the first aspect of the invention.

The rigid polyurethane foam core of the rigid polyurethane insulation foam product of the second aspect or of the third aspect can be a rigid isocyanurate foam core, or can be a rigid polyurethane foam core which is not a rigid isocyanurate foam core.

The rigid polyurethane particles can be configured as in any embodiment of the first aspect of the invention.

Within the context of the invention, rigid isocyanurate foam is considered a sub-class of rigid polyurethane foam.

Within the context of the invention, viscosity is measured at 25°C and according to ASTM D4878-23.

With the intention of better showing the characteristics of the invention, hereafter, as an example without any limitative character, preferred embodiments are described, with reference to the accompanying drawings, wherein:
figure 1 shows an example of the method according to the invention;
figure 2 shows a view according to F2 of figure 1; and
figure 3 shows a view according to III- III of figure 1.

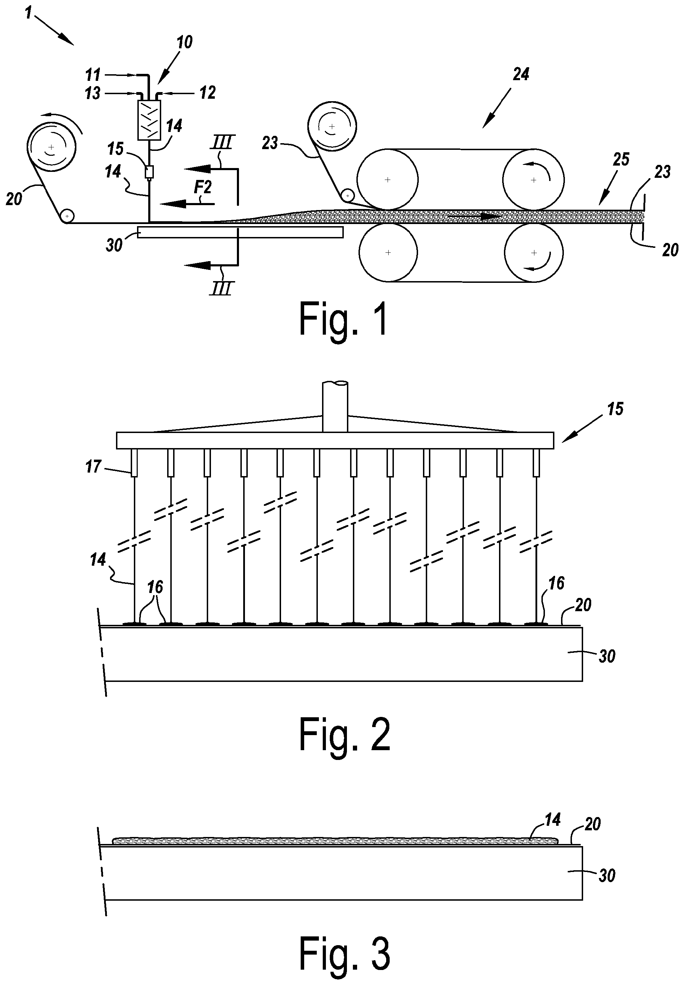

Figure 1 illustrates a non-limiting example of an embodiment of the method according to the invention on a continuous production line 1 for producing isocyanurate insulation panels. Fig. 2 shows the view along F2 of a part of the continuous production line 1 from figure 1. Figure 3 shows a view according to III- III of the continuous production line 1 from figure 1.

A mixing head 10 is provided. Three liquid streams are injected in the mixing head 10. The first stream 11 feeds a first polyol mixture. The second stream 12 feeds a second polyol mixture and the third stream feeds polyisocyanate (e.g. polymeric methylene diphenyl diisocyanate). The three streams are mixed in the mixing head 10, and chemical reactions between the ingredients mixed in the mixing head already start in the mixing head. The mixing head 10 produces a liquid isocyanurate foam formulation 14.

The second polyol mixture comprises polyester polyol and between 1 and 3 wt% isocyanurate particles calculated on the total mass of the liquid polyurethane foam formulation 14. The isocyanurate particles have been obtained from sawing and milling rigid isocyanurate foam panels.

The first polyol mixture comprises polyester polyol of lower viscosity than the polyol of the second polyol mixture.

The second polyol mixture is injected in the mixing head 10 at lower pressure than the first polyol mixture and the polyisocyanate.

A manifold 15 comprising a plurality of spray nozzles 17 is used to deposit the liquid isocyanurate foam formulation 14 in discrete amounts 16 onto a first facer 20. The first facer 20 is unwound from a roll and supported by a heated table 30 at least as of the position of deposition of the liquid isocyanurate foam formulation onto the facer.

The liquid polyurethane foam formulation 14 is deposited in discrete amounts on the first facer 20 such that the first facer 20 is moistened in an interrupted manner by the liquid polyurethane foam formulation 14 in the direction at right angles to the direction of production.

The foam formulation then flows, rises, polymerizes and foams, such that rising foam is provided over the width of the first facer 20, as is shown in figure 3.

The first facer 20 with the reacting and rising isocyanurate foam 14 on it passes through an oven (not shown in the figure) downstream of the heated table 30 by means of and between a double belt 24.

Upstream of the oven - and thus before the double belt 24 - a second facer 23 is unwound from a roll and supplied above the first facer 20 with the isocyanurate foam 14 on it. The second facer 23 can be identical in composition to the first facer 20.

The first facer 20 with the isocyanurate foam on top thereof and the second facer 23 pass through the oven by means of and between the double belt 24. In the oven, the isocyanurate foam formulation continues to expand and react to form a rigid isocyanurate foam panel 25. The rigid isocyanurate foam panel comprises an isocyanurate foam core bonded to and situated between the first facer 20 and the second facer 23.

The present invention is in no way limited to the embodiments described as examples and represented in the figures, on the contrary the invention can be realized in various forms and dimensions, without leaving the scope of the invention.

## Claims

1. Method for producing rigid polyurethane foam - preferably a method for producing rigid isocyanurate foam -, wherein the method comprises the steps of:
- providing ingredients comprising a first polyol mixture, a second polyol mixture, a polyisocyanate, at least a blowing agent, at least a surfactant, at least a catalyst, and optionally additives such as flame retardant additives;
- mixing the ingredients thereby obtaining a liquid polyurethane foam formulation for producing a rigid polyurethane foam; and
- depositing the liquid polyurethane foam formulation;
**characterized in that** the second polyol mixture comprises polyurethane particles dispersed in the second polyol mixture;
preferably wherein the liquid polyurethane formulation obtained comprises between 1 and 3 wt% polyurethane particles.

2. Method as in any of the preceding claims, **characterized in that** the polyol of the second polyol mixture has a lower viscosity than the polyol of the first polyol mixture, preferably wherein the viscosity of the polyol of the second polyol mixture is at least 1000 mPa.s lower - and preferably at least 2000 mPa.s lower - than the viscosity of the polyol of the first polyol mixture.

3. Method as in any of the preceding claims, **characterized in that** the polyol of the second polyol mixture has a viscosity less than 4000 mPa.s.

4. Method as in any of the preceding claims, **characterized in that** the second polyol mixture comprises a dispersing agent for dispersing the polyurethane particles in the second polyol mixture; and/or **in that** the second polyol mixture comprises propylene carbonate.

5. Method as in any of the preceding claims, **characterized in that** the second polyol mixture comprises a liquid flame retardant additive, preferably selected from triethyl phosphate (TEP) or tris (chloropropyl) phosphate (TCPP).

6. Method as in any of the preceding claims, **characterized in that** the at least a blowing agent comprises cyclopentane; preferably the at least a blowing agent comprises on the one hand cyclopentane; and on the other hand isopentane and/or n-pentane, more preferably wherein the amount by mass of cyclopentane in the liquid polyurethane foam formulation is higher than the amount by mass of the combination of isopentane and n-pentane, more preferably wherein the mass ratio of the cyclopentane to the combination of isopentane and n-pentane is between 1:2 and 2: 1.

7. Method as in any of the preceding claims, **characterized in that** the polyurethane particles have D50 particle size less than 70 micrometer, and preferably less than 60 micrometer, and preferably higher than 30 micrometer.

8. Method as in any of the preceding claims, **characterized in that** the liquid polyurethane foam formulation is obtained by injecting the first polyol mixture, the second polyol mixture and the polyisocyanate in a mixing head comprising three feeds for feeding liquid flows; wherein the first feed feeds the first polyol mixture in the mixing head, the second feed feeds the second polyol mixture in the mixing head and the third feed feeds the polyisocyanate in the mixing head.

9. Method as in claim 8, **characterized in that** the first polyol mixture and the polyisocyanate are each injected in the mixing head at a pressure less than 130 bar; and/or **in that** the second polyol mixture is injected in the mixing head at a pressure less than 50 bar.

10. Method as in any of the preceding claims 8 - 9, **characterized in that** each of the first polyol mixture, the second polyol mixture and the polyisocyanate is injected in the mixing head at a temperature of at most 25°C, preferably of at most 23°C, and preferably of at least 21°C.

11. Method as in any of the preceding claims, **characterized in that** the ratio by weight of the amount of polyol in the first polyol mixture to the amount of polyol in the second polyol mixture is between 9:1 and 7:3.

12. Method as in any of the preceding claims, **characterized in that** the liquid polyurethane foam formulation comprises air; preferably wherein air is injected in the first polyol mixture, in the second polyol mixture, or in the polyisocyanate, or in two or in all three of these streams.

13. Method as in any of the preceding claims, **characterized in that** the viscosity of the polyisocyanate is
- less than or equal to 200 mPa.s in the production of rigid polyurethane foam of at most 25 mm thickness;
- between 200 and 400 mPa.s in the production of rigid polyurethane foam of between 25 mm and 100 mm thickness;
- between 300 and 500 mPa.s in the production of rigid polyurethane foam of more than 100 mm thickness.

14. Rigid polyurethane insulation foam product, **characterized in that** the rigid polyurethane foam product comprises a rigid polyurethane foam core comprising rigid polyurethane particles, preferably in an amount between 1 and 3 percent by weight of the rigid polyurethane foam core.

15. Rigid polyurethane insulation foam product, **characterized in that** the rigid polyurethane foam product is manufactured according to a method as in any of the preceding claims 1 - 13.
